# EUROPÄISCHE PATENTANMELDUNG

(11) **EP 0 833 115 A1**
(43) Veröffentlichungstag der Anmeldung: **01.04.1998**
(21) Anmeldenummer: 97250255.3
(22) Anmeldetag: 02.09.1997
(51) Int. Cl.: F24J 3/08, E21B 17/10

(54) **Abstandshalter für Rohrstränge von Erdsonden**

(30) Priorität: 02.09.1996 DE 29615594 U
(71) Anmelder: Scherf, Bernhard, 03229 Altdöbern (DE)
(72) Erfinder: Scherf, Bernhard, 03229 Altdöbern (DE)
(74) Vertreter: Seltmann, Reinhard

(57) **Zusammenfassung**

Die Erfindung betrifft einen Abstandshalter für Erdsonden, der zur Fixierung mehrerer einzelner Pfähle von Erdsonden dient, die zum Zweck der Erdwärmegewinnung senkrecht in den Erdboden einzubringen sind und über mehrere parallel liegende Pfähle verfügen. Aufgabe der Erfidnung ist es, die Form- und Kraftschlüssigkeit eines Abstandshalters für paarig zueinander angeordnete zylindrische Körper, vorzugsweise die regelmäßig paarweise vorhandenen Rohrstränge (4) einer Erdsonde, zu verbessern. Erfindungsgemäß wird die Aufgabe gelöst, indem in einem Abstandshalter von prinzipiell kreisförmiger Grundform zur Aufnahme eines einzelnen Rohrstranges (4) eines Rohrbündels wiederum ein kreisringförmiger Abschnitt (1) vorhanden ist, der einseitig mit einem Öffnungswinkel von 120 Winkelgrad versehen ist. Entsprechend der Zahl paarweise zu haltender Rohrstränge (4) sind kreisringförmige Abschnitte auf einem Teilkreis liegend durch radial angeordnete gestreckte Stege (2) miteinander verbunden. Des weiteren ist zusätzlich eine kreisringförmige Rippe (3) vorhanden. Das Profil der kreisringförmigen Abschnitte (1), der Stege (2) und der Rippen (3) ist in Einbaurichtung vorzugsweise keilförmig ausgebildet (Fig. 3).

## Beschreibung

Die Erfindung betrifft einen Abstandshalter für Erdsonden, der zur Fixierung mehrerer einzelner Rohrstränge von Erdsonden dient, die zum Zweck der Erdwärmegewinnung senkrecht in den Erdboden einzubringen sind und über mehrere parallel liegende Rohrstränge verfügen.

Wärmepumpenanlagen, die der Nutzung der Erdwärme für Heizzwecke dienen, gewinnen mehr und mehr an Bedeutung. Das hat zur Folge, daß Fragen der Erhöhung des Nutzeffektes ebenfalls zunehmende Bedeutung erlangen. Ebenfalls nimmt die Größe bebaubarer Grundstücksflächen ab, sodaß vertikale Sonden mehr und mehr verlangt werden.

Vertikale Sonden werden regelmäßig mit Hilfe des spülenden Bohrens eingebaut, und ein Endausbau der Sonden ist im Normalfall nicht kontrollfähig. Generell nimmt deshalb auch das Interesse zu, die einzelnen Rohrstränge unter streng definierten Einbauverhältnissen einzubringen und im weiteren zu betreiben. Da die einzelnen Rohrstränge regelmäßig paarweise verbunden sind und das Heizmedium zwischen Zu- und Ableitung eine Temperaturdifferenz aufweist, hat es nicht an Versuchen gefehlt, die paarweise angeordneten Rohrstränge hinsichtlich ihrer Lage zueinander bis zum Erreichen der Endteufe zueinander festzulegen. Damit erfolgt eine deutliche Verminderung thermischer Kurzschlüsse zwischen kühler herabfließender Sole und wärmerer aufsteigender Sole, und die Effizienz des Betriebes einer Erdsonde wird dadurch erhöht.

In der DE-OS 36 23 228 / Fig. 5 wird ein Verbindungsteil beschrieben, mit dem kreisrunde oder nahezu kreisrunde Bauteile achsparallel paarig zueinander festgelegt werden. Dieses Verbindungsteil hat den Nachteil, daß es einen relativ breiten kompakten Querschnitt aufweist, der beim vertikalen Mitführen des Rohrstrangpaares während des spülenden Bohrens dem Absenken einen relativ großen Widerstand entgegensetzt und damit die Vertikalabsenkung des Rohrstranges regelmäßig behindert, insbesondere dann, wenn es sich um einen Einbau in rolligem Gebirge handelt. Gleichzeitig ist die Kontaktfläche der einzelnen miteinander verbundenen Einzelrohre eines Rohrstranges zueinander sehr groß.

Das DE-Gm 88 08 676 beschreibt deshalb ein Verbindungsteil, das zwar der Vertikalbewegung einen relativ niedrigen Widerstand entgegensetzt, bei dem die paarig liegenden Rohrstränge ausschließlich im Endbereich der Erdsonde unmittelbar über eine Schraubverbindung zweier zweckentsprechender flacheisenähnlicher Bänder aufeinandergepreßt sind. Die Halterung hat die Aufgabe, als Kontaktfläche für eine Schwerstange zu dienen, mit deren Hilfe die paarweise miteinander verbundenen Rohrstränge einer Erdsonde möglichst gestreckt in die im Erdboden befindliche Bohrung regelrecht hineingezogen werden. Es ist nach erfolgtem Einbau nicht zu kontrollieren, wie sich die Schraubverbindung verhalten hat und außerdem liegen beide Rohre des Stranges, obwohl die Sole des einen Rohrstranges im Verhältnis zum anderen Rohrstrang unterschiedliche Temperaturen aufweist, unmittelbar aneinander an.

Eine Sicherungseinrichtung für parallelgeführte Rohrleitungen, mit deren Hilfe erstmalig der Versuch unternommen wird, die paarweise zueinander festgelegten Rohrstränge einer Erdsonde auf Distanz zu halten, beschreibt das EP 0 582 118. An einem kreisförmigen Haltering befinden sich in radialer Richtung und tangential am Haltering befestigt nach außenhin geschlitzte Kreisringe, deren Innendurchmesser etwa dem Außendurchmesser von festzulegenden Rohrsträngen einer Erdsonde entspricht. Es hat sich gezeigt, daß diese Ausbildung durch die überaus langen Hebelarme der Klemmhalterung regelmäßig keine form- und kraftschlüssige Verbindung gewährleisten kann.

Aufgabe der Erfindung ist es deshalb, die Form- und Kraftschlüssigkeit eines Abstandshalters für paarig zueinander angeordnete zylindrische Körper, vorzugsweise die regelmäßig paarweise vorhandenen Rohrstränge einer Erdsonde, zu verbessern.

Erfindungsgemäß wird die Aufgabe gelöst, indem in einem Abstandshalter von prinzipiell kreisförmiger Grundform zur Aufnahme eines einzelnen Rohrstranges eines Rohrbündels wiederum ein kreisringförmiger Abschnitt vorhanden ist, der einseitig in axialer Richtung soweit geschlitzt ist, daß der Rohrstrang seitlich mit sanfter Gewalt in diese Öffnung hineingedrückt werden kann. Es hat sich gezeigt, daß die seitliche Öffnung, durch die in radialer Richtung der Rohrstrang hineinzudrücken ist, vorzugsweise einen Öffnungswinkel, bezogen auf den Mittelpunkt der abgerundeten Enden, von 120 Winkelgrad aufweisen sollte.

Entsprechend der vorgesehenen Zahl paarweise zu haltender Rohrstränge ist eine adäquate Zahl von kreisringförmigen Abschnitten auf einem Teilkreis liegend derart miteinander verbunden, daß diese durch bezogen auf den Mittelpunkt der kreisringförmigen Abschnitte in radialer Richtung angeordnete gestreckte Stege miteinander verbunden sind. Des weiteren ist zusätzlich eine wiederum auf den den Mittelpunkt der kreisringförmigen Abschnitte schneidenden uind bereits erwähnten Teilkreis bezogen und mit ihrer gedachten Mittellinie deren Mittelpunkt schneidend sowie am jeweiligen äußeren Umfang radial angreifend eine von der Grundform her kreisringförmige Rippe vorhanden. Das Profil der kreisringförmigen Abschnitte, der Stege und der Rippen ist in Einbaurichtung vorzugsweise keilförmig ausgebildet, um beim Einbau ins Erdreich beziehungsweise in die Bohrung etwa Widerstand verursachenden vorhandenen rolligen beziehungsweise festen Bestandteilen besser ausweichen zu können, indem diese beiseitegedrückt werden. Die keilförmige Ausbildung kann durch eine dachförmige Ausbildung aller Bauteile, eine einseitige Abschrägung aller Bauteile oder die Kombination beider Abschrägungen erreicht sein.

Zusätzlich können an den Befestigungspunkten von Steg und Rippe am kreisringförmigen Abschnitt Ausrundungen angeformt sein, die die Stabilität noch erhöhen und damit die Form- und Karftschlüssigkeit verbessern.

Die erfindungsgemäße Halterung ermöglicht trotz weitestgehender Querschnittsreduzierung eine weitestgehend form- und kraftschlüssige Verbindung, indem die federnden Teile der kreisringförmigen Abschnitte relativ kurz bemessen sind. Damit verrutscht die Halterung am Rohr nicht, und es besteht die Möglichkeit des Einleitens relativ großer Haltekräfte. Bei statisch richtiger Bemessung ist eine sichere Aufnahme der einzelnen zu beabstandenden Rohrstränge einer Erdsonde gewährleistet. Der Querschnitt der Stege und Rippen zueinander ist relativ gering, sodaß eine Wärmeableitung aus einem zum jeweils anderen Rohrstrang mit niederer Temperatur auf ein Minimum reduziert ist. Die Anordnung und Ausbildung der die kreisringförmigen Abschnitte verbindenden gestreckten Stege gewährleistet eine hohe Kraftaufnahme, sodaß ein Ausweichen einzelner kreisringförmiger Abschnitte zueinander nicht erfolgt. Zusätzlich wird die Steifigkeit der Verbindung der kreisringförmigen Abschnitte zueinander noch verbessert, indem die kreisringförmige Rippe vorhanden ist. Diese sorgt gleichzeitig für eine Zentrierung des gesamten Pfahlbündels im Bohrloch.

Die Erfindung soll nachfolgend an einem Ausführungsbeispiel näher beschrieben werden. In der zugehörigen Zeichnung zeigt
Fig. 1 die beispielhaft erfindungsgemäße Ausbildung eines Abstandshalters,
Fig. 2 den Schnitt X - X' der Figur 1,
Fig. 3 eine Variation des in Fig. 1 dargestellten Abstandshalters mit Ausrundungen in den Übergangsbereichen.

Ein Abstandshalter besitzt zunächst beispielhaft 4 kreisringförmige Abschnitte 1, die im Winkel von 90° zueinander angeordnet und durch auf deren Mittelpunkt gerichtete gestreckte Stege 2 miteinander verbunden sind, indem diese am äußeren Umfang der kreisringförmigen Abschnitte 1 angreifen. Gleichermaßen sind gebogene Rippen 3 als weitere Verbindungselemente vorhanden, indem diese hinsichtlich ihres mittleren Durchmessers dem Teilkreisdurchmesser entsprechen, auf dem die Mittelpunkte der kreisringförmigen Abschnitte 1 angeordnet sind und zusätzlich am äußeren Umfang der kreisringförmigen Abschnitte 1 angreifend ausgebildet sind.

Die kreisringförmigen Abschnitte 1 besitzen einen freien Innendurchmesser, der dem Außendurchmesser von zueinander festzulegenden Rohrsträngen 4 einer Erdsonde entspricht. Zweckmäßigerweise ist das Innenmaß im Vergleich zum Außendurchmesser der aufzunehmenden Rohrstränge 4 geringfügig reduziert, um das Klemmvermögen noch zu steigern. Vorzugsweise liegt die Reduzierung im Zehntelbereich eines Millimeters. Des weiteren weisen die kreisringförmigen Abschnitte 1 auf der dem Mittelpunkt abgewandten Seite ihres Umfanges eine Aussparung 5 auf, deren freie Breite geringfügig kleiner ist als der Außendurchmesser eines zu fixierenden Rohrstranges 4. Beispielhaft hat sich als günstig erwiesen, wenn der freie Umfang ca. 120 Winkelgrad beträgt, reduziert um etwa die Materialstärke des kreisringförmigen Abschnittes 1.

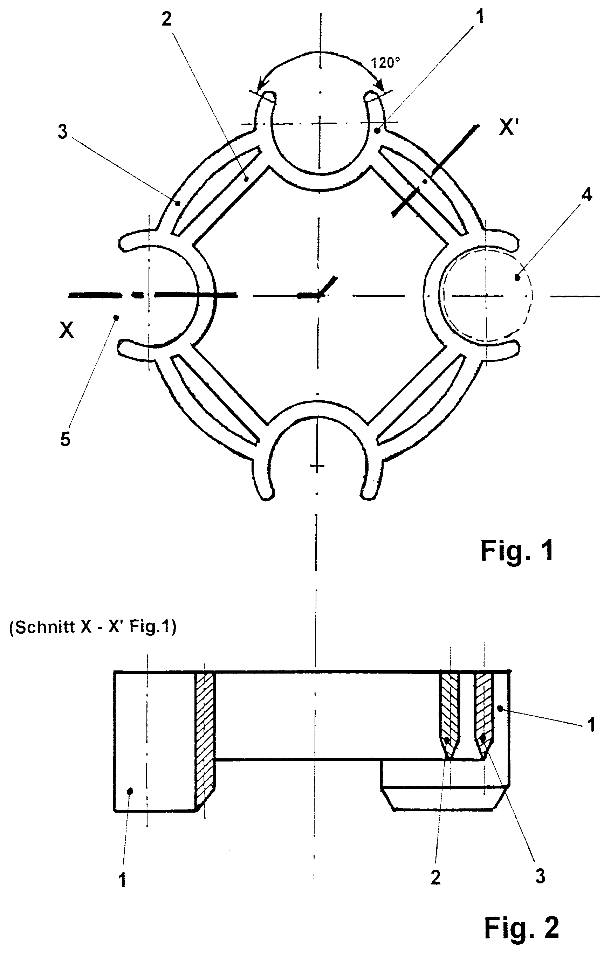

Damit der Abstandshalter beim Absenken der Erdsonde in der Bohrung nicht störend wirkt, sind die Querschnitte von kreisringförmigen Abschnitten 1, gestreckten Stegen 2 und Rippen 3 nicht nur rechteckförmig ausgebildet, indem das Maß der Höhe weit über dem Maß ihrer Breite liegt, vielmehr ist die der Einbaurichtung zugewandte Fläche einseitig oder beiderseitig stark abgeschrägt. Das kann erfolgen, indem die in Einbaurichtung untere Abschlußfläche des Querschnittes, wie in Fig. 2 dargestellt, von kreisringförmigem Abschnitt 1 einseitig keilförmig und der von gestrecktem Steg 2 und Rippe 3 jeweils beiderseitig keilförmig ausgebildet ist. Fig. 2 stellt insoweit eine Vorzugsvariante dar, indem die Höhe des kreisringförmigen Abschnittes 1 höher ist als die Höhe von gestrecktem Steg 2 und Rippe 3 und die Abschrägung sich an der Außenseite von kreisringförmigem Abschnitt 1 befindet, sodaß eine maximale Höhe des kreisringförmigen Abschnittes 1 mit zylindrischem Querschnitt sowie einer daraus resultierenden optimalen Führungsfähigkeit für den Rohrstrang 4 der Erdsonde zur Verfügung steht.

Alternativ ist es ebenso möglich, die der Einbaurichtung zugewandten Kanten alle einseitig abzuschrägen, damit evtl. in der aufgeladenen Spülung und/oder im Bohrloch befindliche feste rollige Bestandteile, die die Vertikalbewegung der Erdsonde während des Einbaus behindern können, beiseite gedrückt werden und ein Verklemmen der Erdsonde vermieden wird.

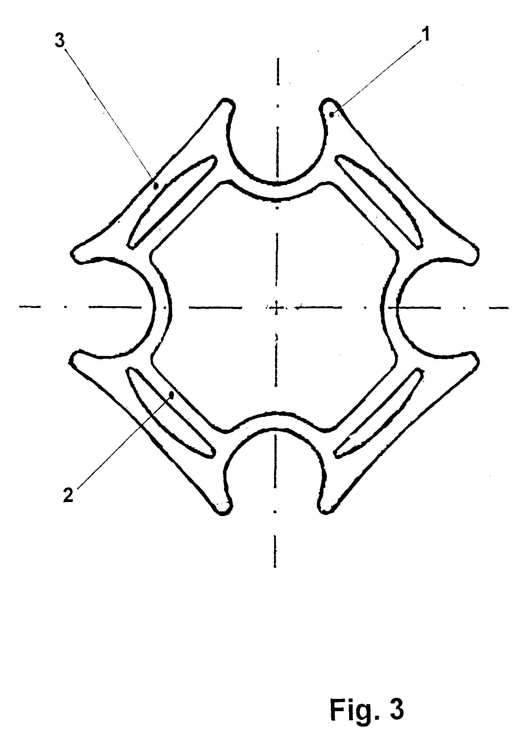

Wie in Fig. 3 dargestellt, ist es ebenso möglich, im Anbindungsbereich von Steg 2 am kreisringförmigen Abschnitt 1 und von Rippe 3 am kreisringförmigen Abschnitt 1 die Kanten auszurunden, damit eine Kerbwirkung im Übergang vermieden und eine gleichmäßigere Krafteinleitung ermöglicht ist.

Selbstverständlich ist es möglich, den erfindungsgemäßen Abstandshalter nur mit 2 kreisringförmigen Abschnitten 1 zur Aufnahme von Rohrsträngen 4 einer Erdsonde auszubilden oder gar deren 6 vorzusehen. Ebenso ist es denkbar, daß auch bei nur 2 einzubauenden Rohrsträngen 4 ein Abstandshalter mit 4 kreisringförmigen Abschnitten 1 verwendet wird, von dem jedoch nur 2 sich gegenüberliegende kreisringförmige Abschnitte 1 besetzt sind.

Der Abstandshalter wird vorzugsweise aus einem hochfesten verrottungssicheren Werkstoff gefertigt. Vorzugsweise ist das ein Kunststoff auf Polypropylenbasis.

## Patentansprüche

1. Abstandshalter für Erdsonden zur achsparallelen Fixierung einer Vielzahl einzelner Rohrstränge von Erdsonden, indem dieser auf seiner kreisförmigen Grundform verteilt kreisringförmige Abschnitte (1) aufweist, die einseitig in axialer Richtung und dem Mittelpunkt des Abstandshalters gegenüberliegend eine freie Aussparung (5) besitzen,
- die kreisringförmigen Abschnitte (1) durch auf ihren Mittelpunkt gerichtete und gestreckt ausgeführte und an deren äußerem Umfang radial angreifende Stege (2) miteinander kraftschlüssig verbunden sind,
- des weiteren die kreisringförmigen Abschnitte (1) verbindend und ebenfalls radial an derem äußerem Umfang angreifend eine kreisringförmige Rippe (3) vorhanden ist, deren mittlere Krümmung dem Teilkreisdurchmesser der Mittelpunkte der kreisringförmigen Abschnitte (1) entsprechend bemessen ist.

2. Abstandshalter nach Anspruch 1, bei dem
- das Profil der kreisringförmigen Abschnitte (1), der gestreckten Stege (2) und der Rippen (3) identisch ist.

3. Abstandshalter nach Anspruch 1, bei dem
- die Höhe des Profiles der kreisringförmigen Abschnitte (1) größer ist als das der gestreckten Stege (2) und Rippen (3).

4. Abstandshalter nach einem der Ansprüche 1 bis 3, bei dem
- der Querschnitt des Profiles der kreisringförmigen Abschnitte (1), der gestreckten Stege (2) und der Rippen (3) rechteckförmig ausgebildet ist.

5. Abstandshalter nach Anspruch 4, bei dem
- die Höhe des Profiles der kreisringförmigen Abschnitte (1), der gestreckten Stege (2) und der Rippen (3) größer ist als dessen Breite.

6. Abstandshalter nach einem der Ansprüche 1 bis 5, bei dem
- die in Einbaurichtung abschließende Profilfläche des Querschnittes der kreisringförmigen Abschnitte (1), der gestreckten Stege (2) und der Rippen (3) regelmäßig von einer Horizontalen abweichend gestaltet ist.

7. Abstandshalter nach einem der Ansprüche 1 bis 5, bei dem
- die untere Fläche des Querschnittes der kreisringförmigen Abschnitte (1) bei Beibehaltung des über ihre gesamte Höhe reichenden zylindrischen Teiles einseitig nach außen verlaufend abgeschrägt ist.

8. Abstandshalter nach einem der Ansprüche 1 bis 5, bei dem
- die untere Fläche des Querschnittes der kreisringförmigen Abschnitte (1) beiderseitig verlaufend und keilförmig abgeschrägt ist.

9. Abstandshalter nach einem der Ansprüche 1 bis 7, bei dem
- die gestreckten Stege (2) und der Rippen (3) keilförmig ausgebildet sind.

10. Abstandshalter nach einem der Ansprüche 1 bis 9, der
- paarweise kreisringförmige Abschnitte (1) aufweist.

11. Abstandshalter nach Anspruch 10, bei dem
- die kreisringförmigen Abschnitte (1) regelmäßig auf dem zugehörigen Teilkreis verteilt sind.

12. Abstandshalter nach einem der Ansprüche 1 bis 11, bei dem
- das Maß des Innendurchmessers der kreisringförmigen Abschnitte (1) geringfügig unter dem des Außendurchmessers eines zu fixierenden Rohrstranges (4) liegt.
